# EUROPEAN PATENT APPLICATION

(11) **EP 0 530 001 A2**
(43) Date of publication of application: **03.03.1993**
(21) Application number: 92307749.9
(22) Date of filing: 25.08.1992
(51) Int. Cl.: B01D 1/26, B01D 3/06, C02F 1/06, B01D 1/22, B01D 1/30

(54) **Multi-stage evaporation of liquid**

(30) Priority: 28.08.1991 US 750855
(71) Applicant: Kamyr, Inc., Glens Falls, New York 12801-3686 (US)
(72) Inventor: Elmore, Carl L., Roswell, Georgia 30077 (US); Rutter, Michael, Roswell, Georgia 30077 (US)
(74) Representative: Shaw, Laurence

(57) **Abstract**

A multi-stage evaporator assembly comprises one or more vertical concrete or steel towers (12,13;93,94;113) housing a number of vertically spaced, evaporator effects (17-22) separated by respective demistors (29,129). The towers (12,13;93,94;113) are associated with a surface condensor (30), a product flash tank (15), and a brine flash tank (14). The product flash tank has chamber (61-65) connected to the condensate discharge (37) from each of the effects (except the first effect), and the vapour from the flash tank is returned to the effects to recover the heat value of the flashed fluid.

## Description

The invention relates to a multi-stage evaporator assembly, and a method of using the assembly to evaporate a liquid e.g. salt water.

Our European patent application 91.307466.2 published on March 3, 1992, under no. EP-A-0473329 describes and claims a method of evaporating an evaporable liquid in a multi effect evaporator having a plurality of effects arranged in a series, each effect comprising elements characterised by: the steps of
a) introducing horizontally flowing heating fluid into the internal passage of at least one set of horizontally elongated dimpled plate evaporator elements of a first effect, and into the internal passage of elements in the other effects in sequence;
b) providing a head of circulation liquid to be evaporated at the top of a set of each effect;
c) causing the liquid to flow downwardly from the head over the external surfaces of the elements of each effect;
d) withdrawing the vapour of evaporated circulation liquid from each effect whilst demisting it to separate liquid from the vapour;
e) recirculating circulation liquid that has not evaporated to the head associated with that effect;
f) horizontally feeding the withdrawn vapour from each effect to the next effect as the fluid provided in step (a) thereof, except for the last effect; and
g) withdrawing clean condensate from the last effect.

That application also describes and claims an evaporator effect, comprising a horizontally elongated vessel having a top, bottom, first end, and second end, characterised in that a first set of elongated in a dimension of elongation dimpled plate evaporator elements, defining an interior passage, and having an exterior surface; means for introducing heating fluid into the interior passage of the dimpled plate evaporator elements; means for mounting the first set of dimpled plate evaporator elements so that they are disposed in said vessel with their dimension of elongation horizontal; means for introducing circulation liquid to be evaporated adjacent the top of said vessel so that it falls over the exterior surfaces of said elements in a falling film, to cause some of said circulation liquid to be evaporated, a demistor mounted within said vessel; means for withdrawing evaporated circulation liquid from said vessel through said demistor; means for causing unevaporated circulation liquid to collect at the bottom of said vessel; and a circulation liquid outlet in the bottom of the vessel. It further describes and claims a multi-stage evaporator having a plurality of effects which are interconnected into a series of effects from a first, highest temperature, to a last, lowest temperature, effect, each effect in the series being characterised by: a horizontally elongated vessel having a top, bottom, first end, and second end; a first set of elongated in a dimension of elongation dimpled plate evaporator elements, defining an interior passage, and having an exterior surface; a second set of elongated in a dimension of elongation dimpled plate evaporator elements, defining an interior passage, and having an exterior surface; conduit means for introducing heating fluid into the interior passage of at least second set of dimpled plate evaporator elements; mounting means for mounting said first and second sets of dimpled plate evaporator elements so that they are disposed in said vessel with their dimension of elongation horizontal, with said first set above said second set; conduit means for introducing circulation liquid to be evaporated adjacent the top of said vessel so that it falls over the exterior surfaces of the said first and second sets of elements in a falling film, to cause some of said circulation liquid to be evaporated; a demistor mounted within said vessel; withdrawal means for withdrawing evaporated circulation liquid from said vessel through said demistor, collection means for causing circulation unevaporated liquid and liquid separated by said demistor, to collect at the bottom of said vessel; and a circulation liquid outlet from the bottom of said vessel; and for each effect except said first effect, said means for introducing heating fluid being connected to said withdrawal means for withdrawing evaporated circulation liquid from the previous effect.

According to the present invention, the basic principles provided in the earlier application are utilised in an assembly - and for practicing a method - that is particularly advantageous. According to the present invention, a plurality of consecutive evaporator effects are disposed within the same vertical tower. Providing such an arrangement minimises the utilisation of ground space and maximises utility. The tower may be quickly and relatively inexpensively constructed by slip form continuous pouring of concrete. While concrete is more effective than steel towers, if desired steel could be utilised. If the towers are built in a region where earthquakes are a problem, the towers may be partially submerged in order to approximate neutral buoyancy, and thereby minimise the chances of damage due to an earthquake.

Two different designs of tower may be provided. In one design, the evaporator effects are disposed within a tower so that the first effect is at the bottom and the last effect is at the top.

In such an arrangement, the liquid being evaporated (e.g. salt water) passes primarily by gravity flow from one effect to the next, thereby minimizing the number and/or size of pumps utilised. Demistors are provided between each of the effects, and in such a construction the evaporated vapour passes upwardly through the demistors from one effect to the next. Upward flow of vapour through demistor gives good separation with minimum carry over of brine.

According to another embodiment of the invention, alternate towers can be constructed so that the first effect is at the top and the last effect is at the bottom. Such a construction allows the vapour to be fed from one tower to the next with minimum piping, although additional pumps and piping are necessary in such circumstance for recirculation of the liquid (e.g. salt water) being evaporated.

The towers according to the present invention are preferably utilised in an assembly including a surface condenser connected to the last effect, providing salt water or other liquid to be evaporated to the last effect, and receiving vapour from the last effect to condense the vapour into product liquid (fresh water). Product liquid (e.g. fresh water) is also achievable by connecting the condensate outlet from each of the effects, except the first effect, to a product flash tank. The product flash tank may have a number of vertically spaced chambers, one corresponding to each of the effects (except for the first). The condensate discharge from the first effect may be returned to the boiler for supplying steam to the first effect.

Also, the assembly may include a brine flash tank. A brine collecting mechanism associated with the first effect may feed brine to the brine flash tank where the heat value thereof is recovered. Both the brine flash tank and the product liquid flash tan's have the vapour therefrom vented to the various evaporator effects, depending upon the temperature of the effect and the particular chamber of the flash tank vented.

The assembly according to the present invention is very cost effective for large desalinisation units, being capable of producing ten to fifty million gallons of fresh water per day from sea water.

The invention also contemplates a method of evaporating salt water to produce product water utilising a plurality of vertically spaced evaporator effects separated by demistors. The method comprises the steps of: Passing salt water to be evaporated downwardly from one effect to the next vertically spaced effect under the force of gravity; and, passing vapour resulting from evaporation of salt water at one effect upwardly through a demistor to the next vertically spaced effect. There also may be the further step of withdrawing condensate from an evaporator effect, and flashing the condensate to cool it. Also the method contemplates recovering the heat value of the flashed condensate by utilising the vapour produced by flashing in an evaporator effect.

It is the primary object of the present invention to provide an advantageous multi-stage evaporator assembly tower, and assembly for desalinisation of salt water or evaporating like liquids, and a method of evaporating salt water to produce product water.

In one aspect the invention provides a multi-stage evaporator assembly comprising a plurality of evaporator effects forming a series of effects from a first, highest temperature to a last, lowest temperature, each effect including at least one set of elongated dimple plate evaporator elements defining an interior passage and having an exterior surface; and having means for introducing heating fluid into the interior passage of the evaporator elements; characterised in that the plurality of effects is disposed in a tower the effects being vertically spaced from each other within the tower, adjacent effects being separated by demistor means, vapour being arranged to flow from one effect to the next effect, in the series through the respective demistor means, feed means for introducing circulation liquid to be evaporated adjacent the top of the elements so that it descends over the exterior surfaces of the elements in a falling film to cause some of the circulating liquid to be evaporated; collection means for collecting condensate forming in the interior passage; and collection means for collecting circulating non-evaporated liquid at the bottom of the evaporator elements, and supply means for supplying circulating liquid collected by the collecting means of one effect to the feed means for introducing circulation liquid to an earlier effect in the series.

In another aspect, the invention provides an evaporator assembly for treatment of feed liquid, characterised by:
a plurality of vertical towers;
a plurality of evaporator effects which form a series of effects from a first, highest temperature, to a last, lowest temperature effect, each effect including a condensate discharge;
each tower containing more than one of the plurality of effects therein, the effects within each tower being vertically spaced from each other within that tower;
a plurality of demistor means mounted within and operatively between the towers so that vapour flow is provided from each effect to the next effect in the series through the respective demistor means;
feed means for feeding feed liquid from the first effect in one tower to the last effect in another; and
feed means for feeding vapour from the last effect in one tower to the first effect in another.

In yet another aspect the invention provides a method of evaporating salt water to produce product water characterised by the steps of:
passing the salt water to be evaporated downwardly from one effect to the next vertically spaced effect under the force of gravity, through a plurality of vertically spaced evaporator effects separated by demistors; and
passing vapour resulting from evaporation of salt water at one effect upwardly through the demistor to the next vertically spaced effect.

### BRIEF DESCRIPTION OF THE DRAWINGS

Figure 1 is a side schematic view of a first embodiment of an evaporator assembly according to the present invention, shown in the drawing in use for desalinisation;
Figure 2 is a schematic longitudinal cross-sectional view of an intermediate evaporator effect utilised in the assembly of Figure 1;
Figure 3 is a view like that of Figure 1 showing a second embodiment of the second tower, containing the fourth through sixth effects;
Figure 4 is a cross-sectional view taken along lines 4-4 of Figure 3;
Figure 5 is a view like that of Figure 1 only for towers with horizontally laid evaporator elements instead of vertically disposed one;
Figures 6 and 7 are cross-sectional views taken along lines A-A and B-B, respectively, of Figure 5;
Figure 8 is a view like that of Figure 3 only for towers with horizontally laid evaporator elements; and
Figure 9 is a cross-sectional view taken along lines A-A of Figure 8.

### DETAILED DESCRIPTION OF THE DRAWINGS

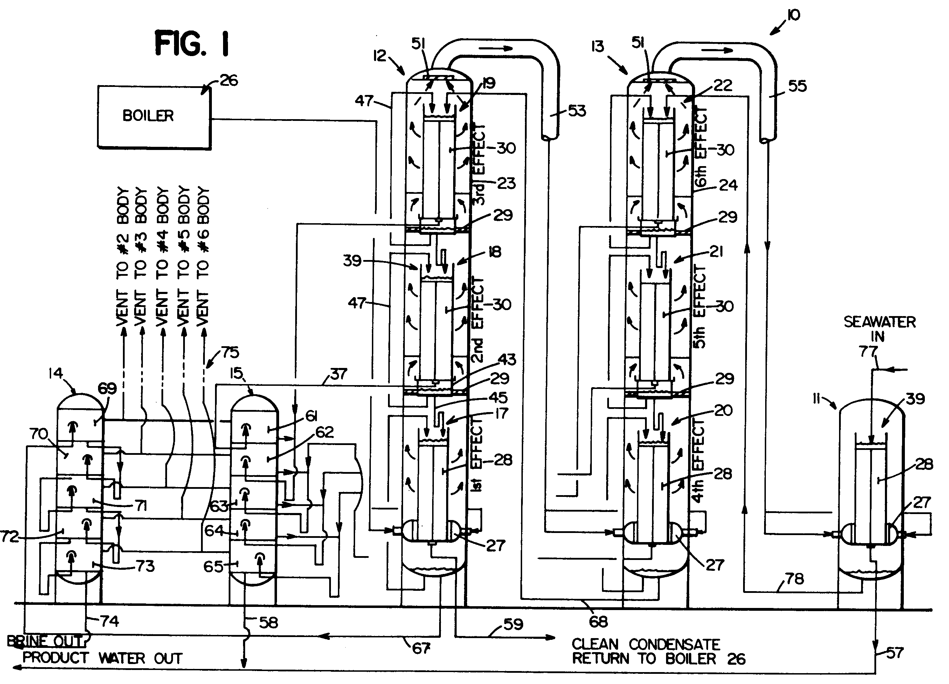

An assembly for the desalinisation of salt water is shown generally by reference numeral 10 in Figure 1. While the invention will be described with respect to salt 'water desalinisation, it is to be understood that it is also useful for other evaporative processes, such as the evaporation of black liquor during paper pulp processing.

The major components of the embodiment of the assembly 10 illustrated in Figure 1 are the surface condenser 11, first and second vertical towers 12,13 respectively, a brine flash tank 14, and a product water flash tank 15. The first tower 12 contains a plurality of effects that are vertically spaced from each other, in the embodiment illustrated first effect 17, second effect 18, and third effect 19. The second tower 13 contains other effects, in the embodiment illustrated the fourth effect 20, fifth effect 21, and sixth effect 22. It is to be understood that while three effects are illustrated in each tower 12,13, two effects, or more than three effects, may be provided in a tower, the towers may have different numbers of effects, and any number of towers can be provided to achieve the desired results.

Each of the vessels 23,24 comprising the towers 12,13 may be made of steel if desired, however the preferred material is slip form continuous pour concrete. Concrete is very effective in salt water and vacuum applications, being non-corrosive, and very cost effective compared to steel towers. The vessels 23,24 preferably are circular in cross-section, although they can have other configurations.

Steam is produced in a boiler 26 (or is supplied from a steam turbine, or other source of waste steam) and is fed to the headers 27 associated with the evaporator elements 28 of the first effect 17. Conventional demister means, such as the demistors 29, are provided in each of the towers 12,13 separating the various effects within each vessel 23,24. Located above the first effect 17 is the second effect 18 which has evaporator elements 30 associated therewith. The evaporator elements 30 differ from the elements 28 only in the lack of a header 27 for the introduction of the heated vapour, and in the provision of a collecting trough at the bottom thereof instead of relying on the bottom of the vessel 23,24 to collect salt water that does not evaporate.

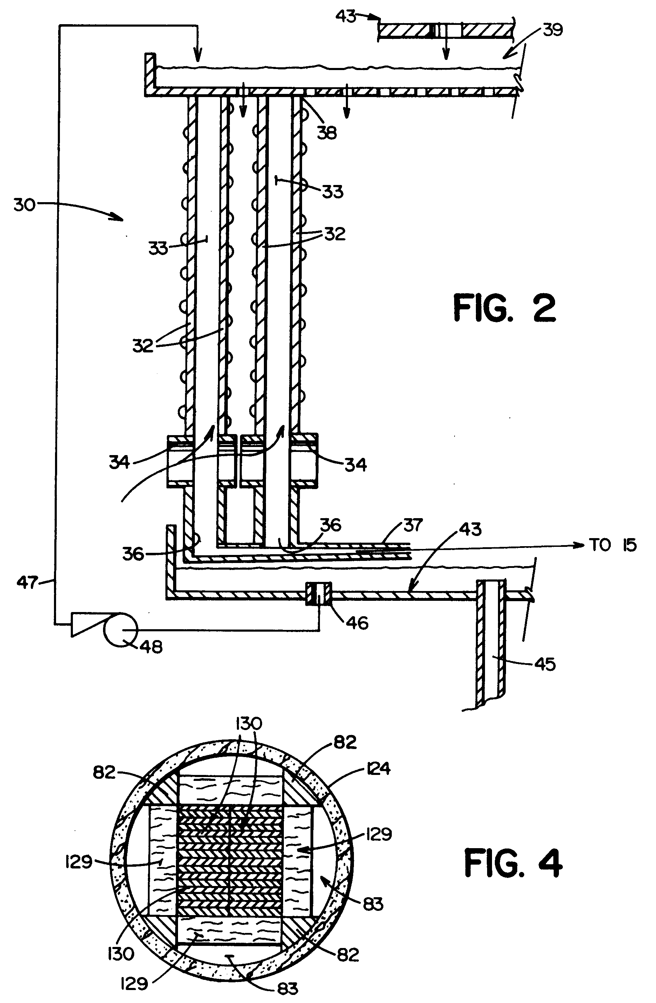

The evaporator elements 30 are very similar to those disclosed in the earlier application, and the elements 30 associated with the second effect 18 (and essentially identical for the effects 19,21 and 22) are illustrated schematically in more detail in Figure 2.

The evaporator elements 30 comprise a plurality of sets of elongated dimple plate elements, the vertically elongated dimple plates of each set being shown by reference numeral 32 in Figure 2. The dimple plates 32 per se are the same as the dimple plates in the earlier application, and the prior art discussed therein.

The plates 32 define a vapour receiving interior 33 therein, while the dimples define an exterior surface. Vapour from an earlier effect passes into the passageway 33 through the inlets 34 (after having passed through a demistor 29). Vapour naturally passes from one effect to the next because of a pressure differential. The open bottom portion 36 of each interior passageway 33 is for the passage of condensate into a header 37, which ultimately passes to the product flash tank 15.

At the top of each of the plates 32 they are closed, as indicated by reference numeral 38. For example they may abut a trough 39 -which comprises means for introducing circulation liquid (salt water) to be evaporated adjacent the top of the plates 32 so that it falls over the exterior surfaces of the plates 32 in a falling film, to cause some of it to be evaporated. The trough 39 includes a bottom 40 which has openings 41 therein spaced so that they are adjacent to the plates 32, and a falling film may then readily form.

At the bottom of the elements 30 is a trough 43 comprising means for collecting circulating liquid (salt water that has not evaporated). The trough 43 includes a central opening and associated passageway 45 which directs the majority of the salt water that collects so that it flows under the force of gravity to the next vertically lower (earlier in this series of treatment) effect; for example for the second effect 18, the conduit 45 would lead to the trough 39 of the first effect 17. A subsidiary passage 46 is also provided in the bottom of the trough 43 which is connected to a recirculating conduit 47, preferably having a pump 48 therein, so that some of the salt water collected in the trough 43 is circulated back to the top of the evaporator elements 30 with which it is associated, into the open trough 39.

At the tops of each of the vessels 23,24 the demistor has a different form than the demistors 29, which are basically annular in configuration, being disposed around the collecting trough 43. The demistor 51 at the top of the vessels 23,24 are basically circular in configuration, the vapour passing through the top of the associated vessel then passing into a vapour conduit. For the first tower 12 the vapour exiting the top passes into the conduit 53, which then directs it to the bottom (fourth effect 20), header 27 in the second tower 13. From the second tower 13, the vapour passes in conduit 55 to the header 27 associated with the evaporator elements 28 of the surface condenser 11.

Products (fresh) water is withdrawn from the surface condenser 11 in the condensate line 57 therefrom. Product water is also added to the line 57 from the condensate discharge line 58 of the product flash tank 15.

The flash tank 15 has a plurality of vertically spaced, stacked, chambers 61 through 65. Preferably, one chamber is provided for each of the effects after the first effect 17. As illustrated in Figure 1, the chambers 61 through 65 are preferably connected to the condensate discharge lines 37 associated with the second through sixth effects 18 through 22, respectively. For each chamber 61-65, the condensate from the chamber is added to the condensate in the line 37 extending to the next lower chamber. The flash tank 15 effects cooling of the product water, and the heat value of the condensate from each of the second through sixth effects 18 through 22 is recovered as will be explained hereafter.

The brine which collects at the bottom of the first tower vessel 23, below the first effect 17, also is preferably treated to recover the heat value therefrom. It is fed in line 67 to the brine flash tank 14. Brine from the bottom of the second vessel 24 passes in line 68 (under the influence of a pump, not shown) to the top of the first vessel 23, being discharged into the trough 39 at the top of the third effect 19.

The brine flash tank 14 preferably also is multi-chamber, for example having the vertically spaced chambers 69 through 73. The final brine is discharged at conduit 74 and is passed back to the source of salt water, e.g. the sea.

Preferably heat recovery occurs simultaneously from the flash tanks 14,15. Preferably the same number of chambers are provided in each of the tanks 14,15 and the temperature of the various chambers in the flash tanks 14,15 are roughly matched and pass to common vents 75. The vents 75, depending upon the particular temperature thereof, are recirculated to one of the vapour inlets to the second through sixth effects 18 through 22, as specified in Figure 1.

The flow of the salt water is opposite the flow of the vapour in the assembly 10. The initial source of salt water preferably is the line 77, which introduces sea water into the top trough 39 associated with the evaporator effects 28 of the source condenser 11. Essentially no evaporation takes place in the surface condenser 11, but rather the introduced sea water is merely heated and then it passes via line 78 (under the influence of a pump - not shown - therein) to the top of the second tower 24, to provide water for evaporation for the sixth effect 22.

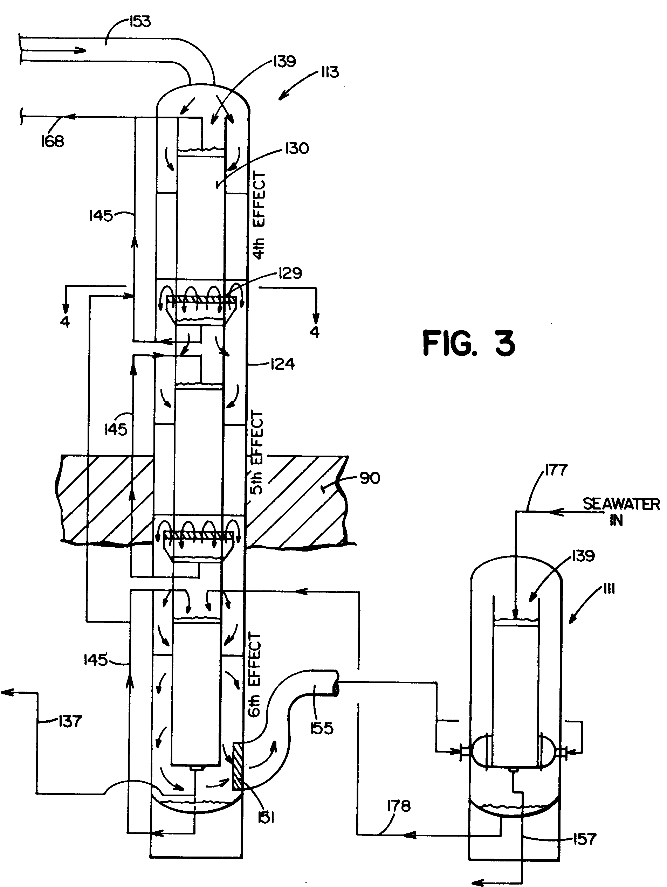

While the particular arrangement of the effects from the first effect to the last effect within any tower going from bottom to top is advantageous since it allows a minimum number of pumps and/or size for the water (the major flow of water to be desalinated being under the force of gravity from one effect to a lower effect), and while the particular passage of vapour which flows upwardly is also advantageous since maximum separation of brine droplets occurs at each demistor 29,51 when the vapour is passing upwardly, under some circumstances it is desirable to have a minimum length of steam conduit from one tower to the next. Under such circumstances, the embodiment of Figure 3 is then utilised for every alternate tower (towers 12,113, alternating). In the embodiment of Figure 3 structures comparable to those in the Figure 1 embodiment are shown by the same two digit reference numeral only preceded by a "1".

In the tower 113, the effects are disposed in series so that the first effect for the tower is at the top and the last effect at the bottom (i.e. the fourth effect is at the top and the sixth effect at the bottom for the embodiment illustrated). Thus the length of the vapour conduit 153 from the previous tower (12) is minimised. In this case, the water being evaporated thus flows upwardly, while the vapour flows downwardly, from effect to effect.

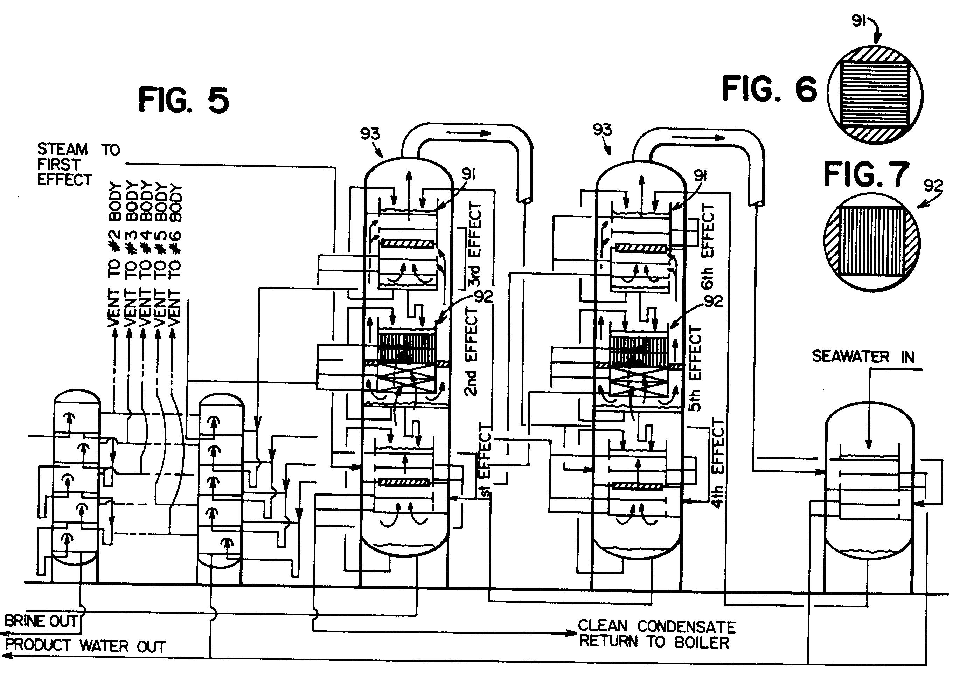

Figure 4 illustrates in more detail the construction of a demistor 129, and associated interior configuration of the vessel 124, that is desired in order to accommodate the "reverse" flow of vapour. The effect elements 130 are substantially the same as the elements 30 except that the vapour inlets (e.g. comparable to the structures 34 in Figure 2) are at the top of the dimpled plates rather than the bottom. Vapour that is formed by evaporation of sea water passing over the exterior surfaces of the plates of the effects 130 passes upwardly from the bottom of each set of elements 130 and passes through the demistor segments 129 seen most clearly in Figure 4, and then flows downwardly. Note that Figure 4 illustrates support structures 82 for supporting the components, such as the elements 130, of the associated effect, and for supporting the demistors 129. Vapour passes upwardly through the demistors 129, and then flows downwardly through the passages 83 (Figure 4) formed by the demistors 129 and the interior surface of the concrete vessel 124.

As seen by the particular configuration of the conduits 179,145,168, in Figure 3, the distribution of liquid from each effect is basically the same as for the Figure 1 embodiment, the only significant difference being that sufficient piping and size of pumps (not shown) must be provided to elevate the non-evaporated circulating liquid (salt water) from one effect to the prior effect.

As seen in Figure 3, care can be taken to guard against earthquakes by mounting tower 113 so that it is partially submerged in the earth 90. This approximates neutral buoyancy, and thus minimises the possibility and/or extent of damage due to an earthquake. Of course towers 12,13 may be similarly mounted.

Figures 5-7 show an assembly similar to that of Figure 1, and Figures 8 and 9 show an assembly similar to that of Figure 3, with the primary difference being only the orientation of the evaporator elements. In Figures 1-4 the evaporator elements (e.g. 28,30,130) are shown vertically disposed (the plates 32 vertically elongated), which is a preferred arrangement to minimise ground space. In Figures 5-9 the evaporator elements (e.g. 91,92) are laid horizontally in the towers (the evaporator plates are horizontally elongated), i.e. they have a disposition similar to the disposition of the evaporator elements in the earlier application. As illustrated in Figures 6 and 7, the horizontal directions of elongation of the elements 91,92 may be perpendicular to each other, with the elements 92 being provided for the second and fifth effects, and the elements 91 for the others. The lowers 93,94 will thus typically be - for a given number of effects - slightly shorter and fatter than the corresponding towers 12,13,113.

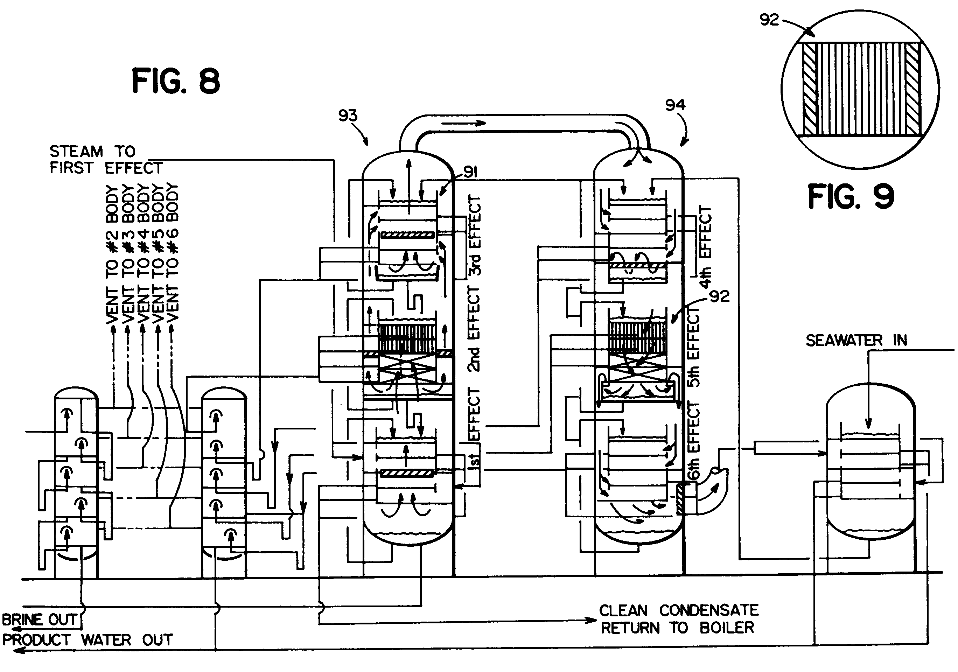

The flow patterns of the vapour and feed liquid in the embodiment of Figures 5-7 are the same as those in Figure 1, and the flow patterns in the embodiment of Figures 8 and 9 are the same as those in Figure 3.

### Operation

Utilising the assembly 10, a method of evaporating salt water to produce product water is provided that is particularly advantageous. The method steps comprise passing the salt water to be evaporated downwardly from one effect to the next vertically spaced effect (e.g. from sixth effect 22 to fifth effect 21) under the force of gravity (which minimises the number and size of pumps necessary), and passing the vapour resulting from evaporation at one effect upwardly through a demistor 29 to the next vertically spaced effect, such as from fifth effect 21 up to sixth effect 22. This upward passage of vapour ensures maximum efficiency in the separation out of brine droplets, and thus minimum carry over. Also the method preferably contemplates the steps of withdrawing condensate from at least one evaporator effect, through a line 37 and flashing the condensate in a chamber (61-65) of a product flash tank 15. The flashed condensate is vented at 75 and then circulated back to an earlier effect to recover its heat value; for example the vapour from chamber 61 is circulated back to the second effect 18, and the vapour from the bottom chamber 65 is circulated back to the sixth effect 22. The condensate in line 59 is returned to the boiler 26.

It will thus be seen that according to the present invention an advantageous assembly and a method of evaporating liquid, such as in the desalinisation of salt water, are provided.

## Claims

1. A multi-stage evaporator assembly comprising a plurality of evaporator effects forming a series of effects (17-19) from a first, highest temperature to a last, lowest temperature, each effect including at least one set of elongated dimple plate evaporator elements (32) defining an interior passage (33), and having an exterior surface; and having means (34) for introducing heating fluid into the interior passage of the evaporator elements; characterised in that the plurality of effects (17-19) is disposed in a tower (12,13;93,94;113), the effects being vertically spaced from each other within the tower, adjacent effects being separated by demistor means (29,129), vapour being arranged to flow from one effect to the next effect, in the series through the respective demistor means (29,129); feed means (39) for introducing circulation liquid to be evaporated adjacent the top of the elements so that it descends over the exterior surfaces of the elements (32) in a falling film to cause some of the circulating liquid to be evaporated; collection means (37) for collecting condensate forming in the interior passage (33); and collection means (43) for collecting circulating non-evaporated liquid at the bottom of the evaporator elements (32), and supply means (45) for supplying circulating liquid collected by the collecting means (43) of one effect to the feed means (39) for introducing circulation liquid to an earlier effect in the series.

2. An assembly according to Claim 1 characterised in that the tower (12,13;93,94;113) comprises a vessel (23,24,124) formed of concrete or steel.

3. An assembly according to Claim 2, arranged so that the circulation liquid contacts first the effect (17) at the bottom of the tower (12,13;93,94;113), and last the effect (19) at the top of the tower.

4. An assembly according to any preceding Claim characterised in that for each effect the means (39) for introducing collecting liquid comprises a tray having a perforated bottom (40,41) and mounted at the top of the evaporator elements (30).

5. An assembly according to Claim 1 or 2, arranged so that the circulation liquid contacts first the effect towards the top of the tower (113, Fig,3) and last the effect at the bottom of the tower.

6. An assembly according to Claim 1 and 5 characterised in that the demistor means (129, Fig,4) defines with the interior wall of the tower (12,13;93,94;113), downflow vapour passages (83, Fig.4) for the passage of vapour from one effect to the next lower effect.

7. An evaporator assembly for treatment of weed liquid, characterised by:
a plurality of vertical towers (12,13;93,94; 113);
a plurality of evaporator effects (17-22) which form a series of effects from a first, highest temperature (17), to a last, lowest temperature effect (22), each effect including a condensate discharge (37);
each tower (12,13;93,94;113) containing more than one of the plurality of effects therein, the effects within each tower being vertically spaced from each other within that tower;
a plurality of demistor means (29,129) mounted within and operatively between the towers so that vapour flow is provided from each effect to the next effect in the series through the respective demistor means;
feed means for feeding feed liquid from the first effect in one tower to the last effect in another; and
feed means for feeding vapour from the last effect in one tower to the first effect in another.

8. An assembly according to Claim 7 characterised by the presence of a surface condenser containing evaporator elements (30) therein, and a condensate, product liquid, outlet (37); a vapour inlet (34) being connected to the evaporator elements (30); and a feed liquid inlet (39) and a feed liquid outlet (43); the vapour inlet (34) being connected to the last evaporator effect, and the feed liquid outlet (43) being connected to the last evaporator effect.

9. A method of evaporating salt water to produce product water characterised by the steps of:
passing the salt water to be evaporated downwardly from one effect (22) to the next vertically spaced effect (21) under the force of gravity, through a plurality of vertically spaced evaporator effects (17-22) separated by demistors (29,129); and
passing vapour resulting from evaporation of salt water at one effect upwardly through the demistor (29,129) to the next vertically spaced effect.

10. A method according to Claim 9 characterised by the further steps of withdrawing (37) condensate from an evaporator effect, and flashing (15) the condensate to cool it; and recovering (75) the heat value of the flashed condensate by utilizing the vapour produced by flashing in an evaporator effect.
